# FASCICULE DE BREVET EUROPEEN

(11) **EP 2 807 471 B1**
(45) Date de publication et mention de la délivrance du brevet: **20.01.2016**
(21) Numéro de dépôt: 13704206.5
(22) Date de dépôt: 25.01.2013
(51) Int. Cl.: G01N 21/41, G01N 21/93, G01N 21/958, G01N 21/90, H04N 5/235, H04N 5/232

(54) **PROCEDE OPTIQUE D'INSPECTION D'ARTICLES TRANSPARENTS OU TRANSLUCIDES VISANT A ATTRIBUER UN REGLAGE OPTIQUE DE REFERENCE AU SYSTEME DE VISION**
OPTISCHES INSPEKTIONSVERFAHREN VON TRANSPARENTEN ODER TRANSLUZENTEN PRÜFOBJEKTEN ZUR ZUWEISUNG EINER OPTISCHEN REFERENZEINSTELLUNG AN DEM SICHTSYSTEM
OPTICAL INSPECTION METHOD OF TRANSPARENT OR TRANSLUCENT ARTICLES FOR ASSIGNING AN OPTICAL REFERENCE ADJUSTMENT TO THE VISION SYSTEM

(30) Priorité: 27.01.2012 FR 1250820
(43) Date de publication de la demande: 03.12.2014
(73) Titulaire: MSC&SGCC, 69390 Vourles (FR)
(72) Inventeur: LECONTE, Marc, F-69700 Loire Sur Rhone (FR); LOPEZ, Bernard, 69300 Caluire (FR)
(74) Mandataire: Thibault, Jean-Marc
(86) Numéro de dépôt international: PCT/FR2013/050157
(87) Numéro de publication internationale: WO 2013/110899

(56) Documents cités:
- DE-A1- 19 946 080
- US-A- 4 606 634
- US-B1- 7 599 051

## Description

La présente invention concerne le domaine technique du contrôle optique d'articles translucides ou transparents en vue de détecter d'éventuels objets absorbant et/ou réfractant la lumière présentés par de tels articles.

L'objet de l'invention trouve une application particulièrement avantageuse pour la détection en tant qu'objets absorbants et/ou réfractants la lumière, de défauts susceptibles d'apparaître sur des articles tels que des récipients en verre ou en matière plastique.

L'objet de l'invention trouve une autre application particulièrement avantageuse pour la détection et l'identification en tant qu'objets absorbants et/ou réfractants la lumière, d' une marque ou d'une gravure contenant une information codant par exemple un numéro de moule.

Il est connu d'inspecter de manière automatique et en ligne, des articles tels que des récipients défilant à haute cadence devant un poste de contrôle optique comportant un système de vision comprenant une source de lumière située d'un côté du récipient et une caméra située de l'autre côté du récipient. La caméra réalise une image grâce à la lumière traversant les récipients. Ce principe d'éclairage est dit par transmission. Bien entendu, plusieurs postes de contrôles sont nécessaires pour contrôler la totalité des récipients. Ainsi, il est connu de mettre en oeuvre un équipement comprenant huit à vingt quatre caméras pour inspecter les parois verticales des récipients. Pour contrôler les fonds des récipients, il est prévu un autre équipement avec la caméra qui est située au-dessus du récipient et la source de lumière en dessous du fond du récipient. Une image du fond du récipient est faite à travers le goulot du récipient.

D'une manière générale, la source de lumière est uniforme et étendue par rapport à l'article inspecté. Dans ces conditions d'observation, les défauts de ces articles se comportent différemment selon leur nature et leur forme et peuvent être classés en deux catégories. Certains de ces défauts tels que des inclusions de matière ou des salissures non transparentes absorbent la lumière tandis que, plus rarement, des plis ou des accidents de surface fortement marqués réfractent fortement la lumière. Dans ces conditions d'observation, ces défauts présentent un contraste dans l'image suffisant pour leur détection.

D'autres défauts réfractants moins marqués tels que des bulles d'air, des plis en surface ou des variations locales d'épaisseur du matériau transparent provoquent selon ces conditions d'observation, un contraste insuffisant dans l'image pour pouvoir être détecté. Tel est le cas notamment des picots de verre naissants.

Dans le cas d'une inspection des fonds de récipients, il est connu de détecter le plus tôt possible l'apparition d'un picot de verre qui est un défaut critique et dangereux, apparaissant progressivement dans la production des récipients. Le picot de verre se présente d'abord comme une petite bosse de verre au fond du récipient et s'accentue progressivement.

Dans le même sens, la détection puis l'identification des gravures nécessite que les formes de ces gravures complètes apparaissent avec un contraste suffisant dans l'image, ce qui n'est pas le cas avec les sources uniformes purement diffusantes.

Pour la détection d'objets réfractant tels que des gravures ou des défauts, l'état de la technique, par exemple par le brevet US 4 606 634 a proposé d'utiliser une source renforçant le contraste des objets refractants. La source de lumière comporte une source étendue uniforme et diffusante, sur laquelle est positionné un masque interchangeable ou un diaphragme à iris délimitant l'ouverture de ladite source. Il est ainsi obtenu une source uniforme, plane, diffuse dite source primaire, qui offre la particularité d'être de dimension variable. Au-dessus de la source primaire est positionnée une lentille convergente, par exemple de type Fresnel, telle que de préférence, son foyer est situé sur la source primaire c'est-à-dire que sa distance focale est de préference égale à la distance la séparant de la source primaire. Comme expliqué dans le brevet US 4 606 634, la source de lumière éclaire l'ensemble du champ défini par la lentille, à l'aide de faisceaux lumineux présentant un spectre angulaire qui dépend directement de la dimension de la source primaire, autrement dit de l'ouverture du diaphragme ou du masque de la source. En conséquence, le contraste sur les objets réfractant observés en transmission est réglé par l'ouverture du masque ou du diaphragme de la source de lumière.

Il est à noter que lors d' un changement des articles à contrôler, le système de vision doit être réglé pour permettre la détection des objets réfractants la lumière. Par ailleurs, un tel réglage du système de vision s'avère également nécessaire en cas de dérive de la détection au cours du temps. Or, il apparaît en pratique particulièrement difficile de régler un tel système de vision en vue de détecter les objets réfractants la lumière, selon un niveau de détection donnée. Cette difficulté tient notamment au nombre de paramètres à régler, à leur interdépendance et au caractère variable de ces paramètres au cours du temps. De manière complémentaire, lorsque plusieurs équipements d'inspection contrôlent en parallèle des flux d'articles identiques, il est souhaité que ces différents équipements possédent le même niveau de contrôle. Or, il apparaît difficile voire impossible d'obtenir en pratique, un niveau de réglage reproductible sur des systèmes de vision faisant partie de plusieurs équipements d'inspection, pour les raisons évoquées ci-dessus mais également en raison du caractère variable des composants faisant partie de ces systèmes de vision.

La présente invention vise donc à remédier aux inconvénients de l'état de la technique en proposant un procédé permettant de pouvoir régler facilement et de manière reproductible, un système de vision permettant de détecter, selon un niveau de détection donné, des objets réfractants la lumière tels que des défauts, des marques ou des gravures.

Pour atteindre un tel objectif, l'objet de l'invention selon la revendication 1 concerne un procédé optique d'inspection d'articles en matériaux transparents ou translucides à l'aide d'un système de vision. Le procédé selon l'invention, consiste :
- à illuminer les articles à l'aide d'une source de lumière dont le spectre angulaire est adapté au contraste choisi pour des objets réfractants présentés par les articles,
- à récupérer à l'aide d'un capteur d'images, la lumière ayant traversé les articles, afin de constituer des images des articles,
- et à analyser les images pour détecter la présence des objets réfractant la lumière,

Selon l'invention, le procédé consiste :
* lors d'une phase de référencement du système de vision :
   - à placer devant la source de lumière et dans le champ de vision du capteur d'images, un étalon de référence comportant an moins un objet étalon réfractant la lumière suivant une gamme d'angles connue,
   - à prendre au moins une image de l'étalon de référence de manière à mesurer au moins le contraste dans l'image produit par au moins un objet étalon et correspondant à un réglage optique optimisé du système de vision,
* et lors d'au moins une phase de qualification du système de vision :
   - à placer de nouveau l'étalon de référence devant la source de lumière et dans le champ de vision du capteur d'images,
   - à prendre au moins une image de l'étalon de référence de manière à mesurer au moins le contraste dans l'image produit par l'objet étalon et correspondant au réglage optique du système de vision lors de cette phase de qualification,
   - et à déterminer au moins si le contraste dans l'image produit par l'objet étalon correspondant au réglage optique du système de vision lors de cette phase de qualification est conforme ou non au contraste dans l'image produit par l'image étalon lors de la phase de référencement.

De plus, le procédé selon l'invention peut comporter en outre en combinaison au moins l'une et/ou l'autre des caractéristiques additionnelles suivantes :
- lors de la phase de qualification visant à régler un système de vision, à assurer le réglage optique du système de vision de manière que le contraste dans l'image produit par l'objet étalon correspondant audit réglage soit conforme au contraste dans l'image produit par l'objet étalon lors de la phase de référencement,
- lors de la phase qualification visant à vérifier le réglage optique du système de vision, à comparer le contraste dans l'image produit par l'objet étalon lors de la phase de référencement et le contraste dans l'image produit par l'objet étalon lors de cette phase de qualification, en vue de déterminer si le réglage optique du système de vision a changé, et dans le cas d'un changement, à alerter et/ou régler le système de vision de manière que le contraste dans l'image produit par l'objet étalon lors de cette phase de référencement devienne conforme au contraste dans l'image produit par l'objet étalon lors de la phase de référencement,
- lors de la phase de référencement du système de vision, à réaliser préalablement au positionnement de l'étalon de référence, une pré-étape de réglage consistant à placer devant la source de lumière et dans le champ de vision du capteur d'images, un article de référence, et à régler le système de vision pour obtenir un réglage optique optimisé,
- lors de la prise d'images, à mémoriser soit l'image de l'étalon de référence, soit au moins une mesure dudit contraste dans l'image produit par l'objet étalon et correspondant au réglage optique du système de vision,
- à mesurer le contraste dans l'image des objets étalons soit par la surface ou la largeur de la partie sombre de l'image de l'objet étalon, soit par le rapport entre la surface de la partie sombre de l'image de l'objet étalon et la surface totale de l'image de l'objet étalon, soit la surface ou le diamètre de la partie claire de l'image de l'objet étalon réfractant, soit par le rapport entre la surface de la partie claire de l'image de l'objet étalon et la surface totale de l'image de l'objet étalon, soit l'histogramme de l'image de l'objet étalon, soit le niveau de gris moyen de l'objet étalon,
- à mesurer dans l'image, en plus du contraste des objets étalons, la luminosité moyenne de l'image, et/ou la nétteté, et/ou le grandissement, et/ou la luminosité des filtres de densité graduelle,
- à placer devant la source de lumière, un étalon de référence comportant plusieurs objets étalons réfractant la lumière suivant des gammes d'angles connues différentes,
- à placer devant la source de lumière, l'étalon de référence comportant des filtres de densité graduelle et/ou une gamme d'objets opaques de dimensions connues,
- à réaliser en tant qu'objets étalons réfractants la lumière, des lentilles, des cônes transparents, ou des dièdres transparents,
- à réaliser les objets étalons réfractants la lumière dans un matériau présentant un indice de réfraction sensiblement égal à l'indice de réfraction du matériau des articles.

Un autre objet de l'invention est de proposer un étalon de référence selon la revendication 12 pour la mise en oeuvre du procédé d'inspection optique conforme à l'invention, comportant un support pourvu d'une série d'objets étalons réfractants la lumière suivant des gammes d'angles connues différentes.

De plus, l'étalon de référence selon l'invention peut comporter en outre en combinaison au moins l'une et/ou l'autre des caractéristiques additionnelles suivantes :
- en tant qu'objets étalons, des lentilles, des cônes transparents ou des dièdres transparents,
- une série de filtres de densité graduelle,
- une série de zones opaques de différentes dimensions.

Un autre objet de l'invention est de proposer un poste d'inspection optique d'articles selon la revendication 16 à l'aide d'un système de vision comportant un support pour un étalon de référence conforme à l'invention, et un système de déplacement du support pour placer temporairement l'étalon de référence dans le champ de vision du capteur d'images, à la place d'un article.

Selon une autre variante de réalisation, le poste optique selon l'invention comporte un système permettant de piloter automatiquement, au moins un paramètre qui influe le réglage optique du système de vision, ce système étant commandé par l'unité de traitement et d'analyses des images du système de vision de manière à agir sur au moins un paramètre qui influe le réglage optique du système de vision de manière que le contraste dans l'image produit par l'objet étalon correspondant au réglage optique du système de vision lors de la phase de qualification soit conforme au contraste dans l'image produit par l'objet étalon lors de la phase de référencement.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue schématique permettant d'expliciter le procédé de contrôle d'objets absorbants et/ou réfractants la lumière à l'aide d'un système de vision.
La **Figure 2** est une vue d'un exemple de réalisation d'un étalon de référence utilisé pour la mise en oeuvre du procédé conforme à l'invention.
La **Figure 2A** est une vue en coupe de l'étalon de référence prise sensiblement selon les lignes A-A de la **Fig. 2**.
La **Figure 3** est une vue en coupe d'un autre exemple de réalisation d'un étalon de référence comportant en tant qu'objets étalons, des cônes transparents.

Les **Fig. 4** et **4A** sont des vues respectivement de dessus et en coupe selon la ligne A-A de la **Fig. 4**, d'un autre exemple de réalisation d'un étalon de référence comportant en tant qu'objets étalons des dièdres transparents.

La **Figure 5** est une image **I** de l'étalon de référence pour un réglage optique donné du système de vision conforme à l'invention.

La **Figure 6** est une autre image **I** de l'étalon de référence pour un autre réglage optique du système de vision conforme à l'invention.

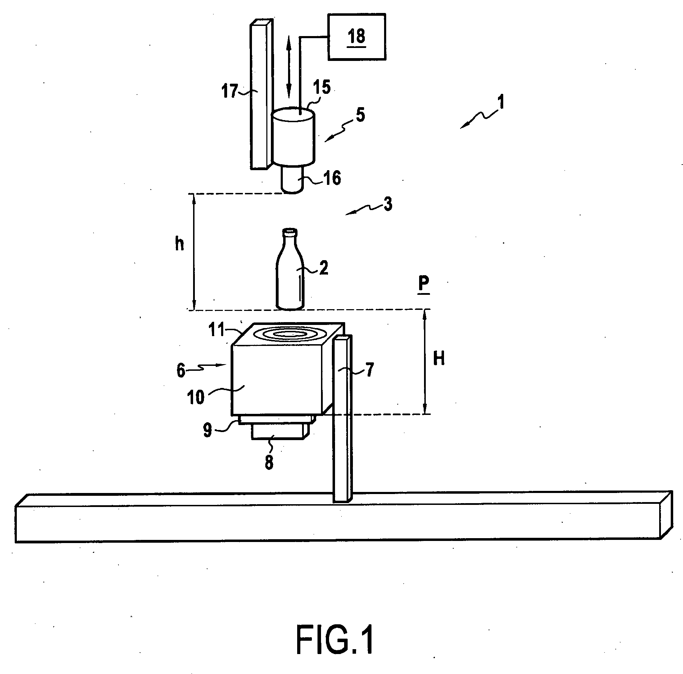

La **Fig. 1** illustre à titre d'exemple un poste d'inspection optique **1** pour des articles **2** en matériau transparent ou translucide tels que des récipients dans l'exemple illustré. L'inspection optique des récipients **2** est réalisée à l'aide d'un système de vision **3**. De manière classique, les récipients **2** sont acheminés successivement devant le système de vision **3** par tous moyens appropriés connus en soi, en étant positionnés dans un plan de référence **P**.

Le système de vision **3** comporte un capteur d'images **5** et une source de lumière **6** illuminant les récipients **2**. Dans l'exemple illustré, la source de lumière **6** est placée en dessous du fond du récipient **2** tandis que le capteur d'images **5** est placé au-dessus du goulot du récipient **2**. Selon cette configuration, une image du fond du récipient **2** est faite à travers le goulot du récipient **2**, en vue de détecter des objets réfractants la lumière situés dans le fond du récipient. Bien entendu, il peut être prévu que le système de vision **3** inspecte les parois verticales des récipients **2**. Dans ce cas, le capteur d'images **5** et la source de lumière **6** sont placés de part et d'autre des parois verticales du récipient **2**.

La source de lumière **6** est conçue pour renforcer le contraste des objets réfractants la lumière tel que des défauts du type picots de verre par exemple. La source de lumière **6** présente ainsi les caractéristiques de la source de lumière décrite par le brevet US 4 606 634.

La source de lumière **6** délivre un faisceau lumineux dont le spectre angulaire est adapté au contraste choisi ou désiré pour les objets réfractants présentés par le récipient **2**. De manière classique, la source de lumière **6** est montée sur un support **7** avec une possibilité de réglage permettant de régler la position de la source de lumière **6** par rapport au plan de référence **P**. La source de lumière **6** comporte une source d'éclairage **8** réalisée par exemple par une série de diodes électroluminescentes dont la durée d'éclairage est pilotée par un circuit de commande non représenté mais connu en soi.

La source de lumière **6** comporte également un diaphragme **9** à caractère réglable permettant de régler l'ouverture de la source d'éclairage **6**.

Il est ainsi obtenu une source uniforme plane et diffuse présentant une dimension variable dont le flux lumineux est acheminé à l'intérieur d'un bloc **10** équipé d'une lentille convergente **11** par exemple de type Fresnel. La lentille convergente **11** est placée de manière que son foyer se trouve sensiblement situé sur le diaphragme **9** c'est-à-dire que la distance focale de la lentille **11** est égale à la distance la séparant du diaphragme **9**. Comme expliqué dans le brevet US 4 606 634, la source de lumière **6** éclaire l'ensemble du champ défini par la lentille **11** à l'aide de faisceaux lumineux présentant un spectre angulaire qui dépend directement de l'ouverture du diaphragme **9**. Ainsi, le contraste sur les objets réfractants observés en transmission est réglé par l'ouverture du diaphragme **9**.

La lumière ayant traversé le récipient **2** est récupérée à l'aide du capteur d'images **5** permettant de constituer une ou plusieurs images du récipient **2**. Le capteur d'images **5** comporte une caméra **15** munie d'un objectif **16**. Avantageusement, le capteur d'images **5** est monté de manière réglable sur un support **17** permettant de régler la distance ou la hauteur **h** du capteur d'images **5** par rapport au plan de référence **P**. Le capteur d'images **5** est relié à une unité **18** de traitement et d'analyses des images prises permettant en particulier de détecter la présence d'objets réfractants la lumière dans les articles **2**.

L'inspection des articles **2** à l'aide du système de vision **3** découle directement de la description qui précède. A cet effet, la méthode d'inspection consiste :
- à illuminer les articles **2** à l'aide de la source de lumière **6** dont le spectre angulaire est adapté au contraste choisi pour les objets réfractants présentés par les articles **2** et dont on veut détecter la présence,
- à récupérer à l'aide du capteur d'images **5**, la lumière ayant traversé les articles **2** afin de constituer des images des articles **2**,
- et à analyser les images pour détecter la présence éventuelle des objets réfractants la lumière.

Le système de vision **3** est réglé de manière à détecter la présence d'objets réfractants dans le récipient **2**. Le réglage optique du système de vision **3** correspond à la configuration des divers éléments composant le système de vision **3** à savoir la caméra **15**, son objectif **16** et la source de lumière **5**. Le réglage optique du système de vision **3** désigne donc la configuration de l'ensemble des paramètres optiques, mécaniques, électroniques ou numériques qui influencent la luminosité, le constraste et la résolution de l'image. Les paramètres qui influent le réglage optique du système de vision **3** sont les suivants :
- le gain de la caméra **15** agissant sur la luminosité et présentant une valeur fixe,
- le temps d'intégration de la caméra **15** agissant sur la luminosité et pouvant faire l'objet d'un réglage,
- l'ouverture de l'objectif **16** qui agit sur la luminosité et la profondeur de champ,
- la focale de l'objectif **16** présentant un caractère réglable et agissant sur le grandissement de l'image,
- la mise au point de l'objectif **16**,
- la hauteur **h** de la caméra **15** par rapport au plan de référence **P**, agissant sur la taille de l'image, cette hauteur **h** étant réglable par rapport au plan de référence **P**,
- la hauteur **H** de la source de lumière **6** par rapport au plan de référence **P** présentant une possibilité de réglage et agissant sur le contraste,
- le diaphragme **9** de la source de lumière **6** présentant une possibilité de réglage et agissant sur le contraste des objets réfractants, dans l'image,
- la durée d'éclairage de la source de lumière **6** présentant une possibilité de réglage et agissant sur la luminosité de l'image.

L'objet de l'invention vise à proposer un procédé simple pour régler le système de vision **3** ou pour vérifier le réglage optique du système de vision **3**, un tel système de vision **3** présentant un réglage optique optimisé pour détecter les objets réfractants la lumière présentés éventuellement par les articles **2**. Conformément à l'invention, le procédé pour régler ou vérifier le réglage optique du système de vision **3** consiste à utiliser un étalon de référence **20**.

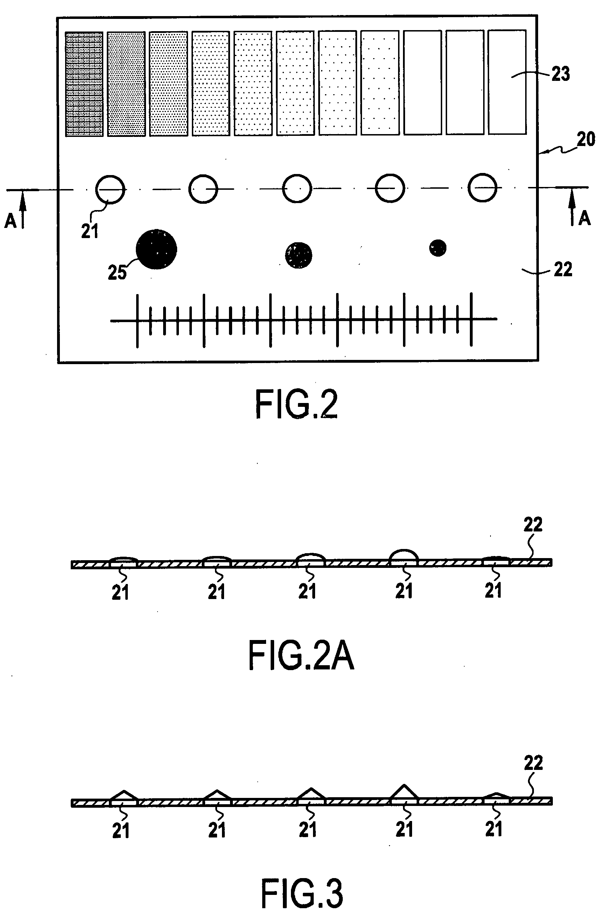

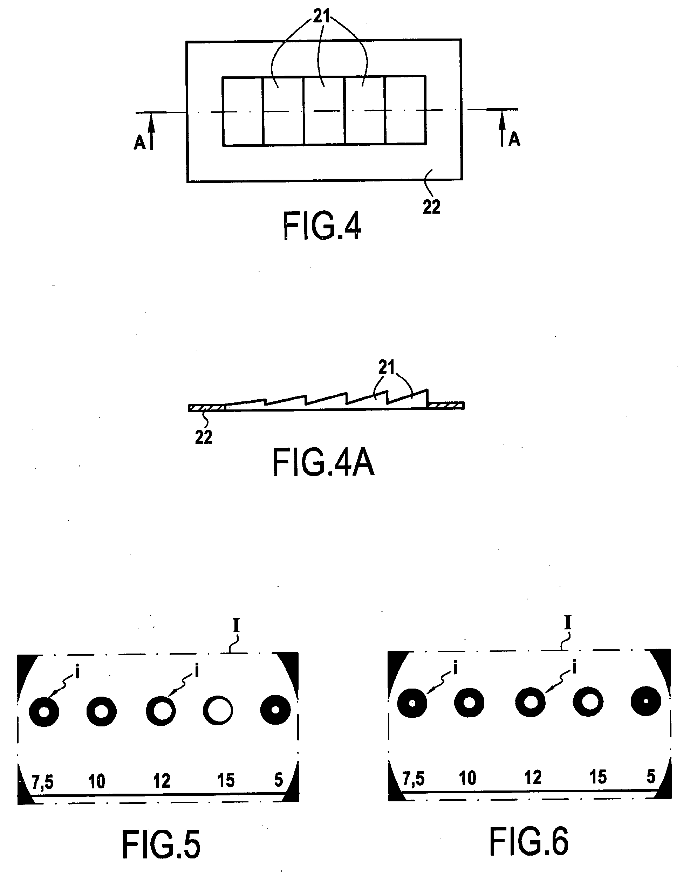

Tel que cela ressort plus précisément de l'exemple de réalisation illustré aux **Fig. 2** et **2A**, l'étalon de référence **20** comporte au moins un et dans l'exemple illustré, cinq objets étalons **21** réfractants la lumière suivant une gamme d'angles connus. Dans l'exemple illustré aux **Fig. 2** et **2A**, l'étalon de référence **20** comporte un support **22** tel qu'une plaque métallique pourvue de trous ou une plaque en matière plastique sur laquelle sont montés en tant qu'objets étalons **21**, des lentilles transparentes plans convexes. Dans l'exemple illustré, les cinq lentilles plans convexes **21** présentent un diamètre de 5 mm et une focale respectivement égale à 5 mm, 7,5mm, 10 mm, 12 mm, et 15 mm. Bien entendu, il est clair que l'étalon de référence peut présenter des objets étalons **21** en nombre différent et selon des focales différentes. Les objets étalons **21** sont montés sur le support **22** de manière à pouvoir être placés simultanément dans le champ de vision de la caméra **15**. Il est à noter que les objets étalons **21** peuvent être réalisés en matériau transparent selon une configuration géométrique différente. Par exemple, les objets étalons **21** peuvent être réalisés par des cônes transparents (**Fig. 3**) ou des dièdres transparents (**Fig. 4**, **4A**) et présentant une gamme d'angles de réfraction, ces objets étalon **21** étant obtenus par moulage et/ou usinage et/ou polissage. Dans l'exemple illustré sur les dessins, les objets étalons **21** sont des éléments optiques saillants mais il est clair que ces éléments optiques peuvent être réalisés en creux. De même, en tant qu'objet étalon **21**, les **Fig. 2** et **2A** illustrent une lentille plan convexe mais il est clair que l'objet étalon **21** peut être réalisé par une lentille plan concave, une lentille bi-concave ou une lentille bi-convexe.

Selon une caractéristique avantageuse de réalisation, les objets étalons **21** sont réalisés dans un matériau présentant un indice de réfraction sensiblement égal à l'indice de réfraction du matériau des récipients **2**.

L'étalon de référence **20** tel que décrit ci-dessus est utilisé pour régler le système de vision **3** ou pour vérifier le réglage du système de vision **3**. Cette procédure dite d'étalonnage comporte deux phases :
- une première phase dite de référencement du système de vision **3** au cours de laquelle est caractérisé le réglage optique du système de vision,
- et une deuxième phase dite de qualification du système de vision **3** permettant de régler ou de vérifier le réglage optique du système de vision **3**.

Cette deuxième phase dite de qualification intervient dans le temps après la première phase dite de référencement et peut bien entendu être renouvelée à volonté pour vérifier de manière régulière ou non au cours du temps, la stabilité du réglage optique du système de vision **3** au cours du temps.

La procédure dite d'étalonnage est ainsi réalisée lors du réglage du système de vision **3** pour une nouvelle production de récipients **2** ou lors du contrôle du réglage optique du système de vision **3**. Pendant cette procédure d'étalonnage, aucun récipient **2** n'est placé dans le champ de vision du capteur d'images **5**.

La phase de référencement du système de vision **3** consiste :
- à placer devant la source de lumière **6** et dans le champ de vision du capteur d'images **5**, l'étalon de référence **20**,
- et à prendre au moins une image **I**, de l'étalon de référence **20** de manière à mesurer au moins une caractéristique optique de référence correspondant à un réglage optique optimisé du système de vision **3**. La **Fig. 5** illustre une image **I** prise pour l'étalon de référence **20** placée en lieu et place d'un récipient **2**. Sur cette image **I** apparaissent des images **i** au nombre de cinq, des objets étalons **21** de l'étalon de référence **20**. Comme cela apparaît clairement sur la **Fig.** 5, la réfraction dé la lumière sur chaque objet étalon **21** conduit à une image **i** de l'image étalon **21** comportant une partie sombre et une partie claire. La **Fig. 6** illustre une autre image **I** de l'étalon de référence **20**, obtenue pour un autre réglage optique du système de vision **3**.

L'image **I** de l'étalon de référence est analysée de manière à quantifier ou mesurer au moins une caractéristique optique de référence correspondant au réglage optique du système de vision **3**. En tant que caractéristique du réglage optique du système de vision **3** est pris en compte au moins le contraste dans l'image produit par la réfraction de la lumière sur au moins un et d'une manière générale, les objets étalons **21**.

La mesure du contraste dans l'image des objets étalons **21** peut être réalisée de différentes manières telles que par exemple :
- par la mesure de la surface ou de la largeur de la partie sombre de l'image **i** de l'objet étalon **21**,
- par le rapport entre la mesure de la surface de la partie sombre de l'image **i** de l'objet étalon **21** et la mesure de la surface totale de l'image **i** de l'objet étalon **21**,
- par la mesure de la surface ou la largeur de la partie claire de l'image **i** de l'objet étalon **21**,
- par le rapport entre la mesure de la surface de la partie claire de l'image **i** de l'objet étalon **21** et la mesure de la surface totale de l'image **i** de l'objet étalon **21**,
- par le niveau de gris moyen de l'objet étalon **21**,
- par l'histogramme de l'image **i** de l'objet étalon **21**.

Il est évident qu'il est possible d'adapter les mesures ci-dessus en fonction de la configuration géométrique des objets étalons **21** utilisés, comme par exemple, des cônes transparents ou des dièdres transparents.

Il doit être compris que cette phase de référencement du système de vision **3** permet de caractériser une configuration optique non pas, par une prise en compte de l'ensemble des paramètres qui influent le réglage optique et dont certains sont difficiles à mesurer, mais par son effet recherché de détection des défauts réfractants. De ce fait, la caractérisation est transposable dans le temps et d'une machine à l'autre et ce, malgré la dispersion des caractéristiques physiques des machine. Cette caractérisation du réglage optique du système de vision **3** est réalisée par la mesure d'au moins une caractéristique optique de référence correspondant à l'une et/ou l'autre des mesures du contraste dans l'image des objets étalons **21**.

Selon une caractéristique avantageuse de réalisation, le procédé consiste à mémoriser soit l'image **I** de l'étalon de référence **20**, soit au moins une mesure des caractéristiques du réglage optique du système de vision **3**, c'est-à-dire, l'une et/ou l'autre des mesures du contraste dans l'image des objets étalons **21** telles que décrites ci-dessus.

Après l'accomplissement de la phase de référencement, la procédure dite d'étalonnage vise à réaliser la phase dite de qualification du système de vision **3**, consistant soit à vérifier le réglage optique du système de vision soit à régler le système de vision.

La phase de qualification est mise en oeuvre alors qu'aucun récipient **2** n'est placé dans le champ de vision de la caméra **15**.

Dans le cas où cette phase de qualification vise à vérifier la stabilité du réglage optique du système de vision **3**, cette phase de qualification consiste :
- à placer de nouveau l'étalon de référence **20** devant la source de lumière **6** et dans le champ de vision du capteur d'images **5** :
- à prendre au moins une image **I**, de l'étalon de référence **20** de manière à mesurer au moins la caractéristique optique correspondant au réglage optique du système de vision **3** lors de cette phase de qualification,
- et à déterminer si la caractéristique optique correspondant au réglage optique du système de vision **3** lors de cette phase de qualification est conforme ou non à la caractéristique optique de référence déterminée lors de la phase de référencement du système de vision **3**.

Comme expliqué ci-dessus en relation de la phase de référencement, le procédé selon l'invention vise à prendre en compte, pour cette phase de qualification, en tant que caractéristique du réglage optique du système de vision **3**, au moins le contraste dans l'image produit par la réfraction de la lumière sur les objets étalons **21**.

Le procédé consiste ainsi à comparer la caractéristique optique de référence et la caractéristique optique correspondant au réglage optique du système de vision **3** lors de cette phase de qualification en vue de déterminer si le réglage optique du système de vision **3** a changé. En d'autres termes, le procédé selon l'invention consiste à comparer le contraste dans l'image produit sur les objets étalons **21** lors de la phase de référencement et lors de la phase de qualification.

Dans le cas où il est estimé que la caractéristique optique correspondant au réglage optique du système de vision **3** lors de cette phase de qualification correspond à la caractéristique optique de référence, alors la procédure dite d'étalonnage est terminée et le procédé d'inspection des articles **2** peut être poursuivi.

Dans le cas où il est estimé que la caractéristique optique correspondant au réglage optique du système de vision **3** lors de cette phase de qualification ne correspond pas à la caractéristique optique de référence, alors le procédé consiste à émettre un signal d'alerte et/ou à régler le système de vision **3** de manière que la caractéristique optique correspondant au réglage optique devienne conforme à la caractéristique optique de référence. Bien entendu, le réglage du système de vision **3** est réalisé avec l'un et/ou l'autre des paramètres du système de vision, évoqués ci-dessus.

Il est à noter que la phase de qualification d'un système de vision **3** peut avoir comme objectif d'assurer le réglage optique du système de vision **3**. Dans ce cas, le réglage optique du système de vision **3** est réalisé de manière que la caractéristique optique correspondant audit réglage soit conforme à la caractéristique optique de référence. Bien entendu, le réglage du système de vision **3** est réalisé avec l'un et/ou l'autre des paramètres du système de vision **3** évoqués ci-dessus.

Il est à noter qu'une telle phase visant à régler un système de vision peut être réalisé à l'aide d'un système de vision identique ou différent du système de vision utilisé lors de la phase de référencement. Cette dernière possibilité permet de régler de façon identique, deux systèmes de vision placés par exemple en parallèle pour inspecter une production d'articles **2**. Ainsi, après le réglage du premier système de vision selon la procédure dite d'étalonnage telle que décrite ci-dessus, la procédure dite d'étalonnage pour le deuxième système de vision consiste à comparer la caractéristique optique correspondant au réglage du deuxième système de vision **3** à la caractéristique optique de référence déterminée au cours de la phase de référencement et enregistrée dans l'unité de traitement associée au deuxième système de vision. L'enregistrement dans l'unité de traitement associée au deuxième système de vision peut être réalisé de toute manière appropriée comme par exemple, par transmission à partir du premier système de vision ou à l'aide d'un support amovible d'enregistrement. Le deuxième système de vision est réglé de manière que la caractéristique optique correspondant au réglage de ce deuxième système de vision soit conforme à la caractéristique optique de référence.

Il est à noter qu'il peut être avantageux lors de la phase de référencement du système de vision, à réaliser préalablement au positionnement de l'étalon de référence **20**, une pré-étape de réglage consistant à placer devant la source de lumière **6** et dans le champ de vision du capteur d'images **5**, un récipient étalon ou de référence et à régler le système de vision **3** pour obtenir un réglage optique optimisé.

Selon une variante avantageuse de réalisation, l'étalon de référence **20** comporte également des filtres **23** de densité graduelle permettant d'accéder à la luminosité de l'image. Selon une autre variante préférée de réalisation, l'étalon de référence **20** comporte également une gamme d'objets opaques **25** de dimensions connues tels que des points de différents diamètres permettant de contrôler la netteté et/ou le grandissement du système de vision **3**.

Il ressort de la description qui précède que la mise en oeuvre de l'invention consiste à placer l'étalon de référence **20** dans le champ de vision de la caméra en lieu et place d'un article **2**. Selon une variante avantageuse de réalisation, le poste d'inspection optique **1** peut comporter un support non représenté, pour supporter l'étalon de référence **20** et un système de déplacement manuel ou motorisé, permettant de placer temporairement l'étalon de référence dans le champ de vision du capteur d'images, à la place d'un article **2**.

Selon une variante avantageuse de réalisation, le poste d'inspection optique **1** comporte un système permettant de piloter automatiquement, au moins un paramètre qui influe le réglage optique du système de vision **3**, ce système étant commandé par l'unité **18** de traitement et d'analyses des images du système de vision **3** de manière à agir sur au moins un paramètre qui influe le réglage optique du système de vision **3** de manière que le contraste dans l'image produit par l'objet étalon **21** correspondant au réglage optique du système de vision **3** lors de la phase de qualification soit conforme au contraste dans l'image produit par l'objet étalon **21** lors de la phase de référencement.

L'invention n'est pas limitée aux exemples décrits et représentés car diverses modifications peuvent y être apportées sans sortir de son cadre.

## Revendications

1. Procédé optique d'inspection d'articles (**2**) en matériaux transparents ou translucides à l'aide d'un système de vision (**3**), le procédé consistant :
- à illuminer les articles (**2**) à l'aide d'une source de lumière (**6**) dont le spectre angulaire est adapté au contraste choisi pour des objets réfractants présentés par les articles (**2**),
- à récupérer à l'aide d'un capteur d'images (**5**), la lumière ayant traversé les articles (**2**), afin de constituer des images des articles (**2**),
- et à analyser les images pour détecter la présence des objets réfractant la lumière,
**caractérisé en ce qu'**il consiste :
* lors d'une phase de référencement du système de vision (**3**) :
- à placer devant la source de lumière (**6**) et dans le champ de vision du capteur d'images (**5**), un étalon de référence (**20**) comportant au moins un objet étalon (**21**) réfractant la lumière suivant une gamme d'angles connue,
- à prendre au moins une image de l'étalon de référence (**20**) de manière à mesurer au moins le contraste dans l'image produit par au moins un objet étalon (**21**) et correspondant à un réglage optique optimisé du système de vision (**3**),
* et lors d'au moins une phase de qualification du système de vision (**3**) :
- à placer de nouveau l'étalon de référence (**20**) devant la source de lumière (**6**) et dans le champ de vision du capteur d'images (**5**),
- à prendre au moins une image (**I**) de l'étalon de référence (**20**) de manière à mesurer au moins le contraste dans l'image produit par l'objet étalon (**21**) et correspondant au réglage optique du système de vision (**3**) lors de cette phase de qualification,
- et à déterminer au moins si le contraste dans l'image produit par l'objet étalon (**21**) correspondant au réglage optique du système de vision (**3**) lors de cette phase de qualification est conforme ou non au contraste dans l'image produit par l'image étalon (**21**) lors de la phase de référencement.

2. Procédé selon la revendication 1, **caractérisé en ce qu'**il consiste lors de la phase de qualification visant à régler un système de vision (**3**), à assurer le réglage optique du système de vision (**3**) de manière que le contraste dans l'image produit par l'objet étalon (**21**) correspondant audit réglage soit conforme au contraste dans l'image produit par l'objet étalon (**21**) lors de la phase de référencement.

3. Procédé selon la revendication 1, **caractérisé en ce qu'**il consiste lors de la phase qualification visant à vérifier le réglage optique du système de vision (**3**), à comparer le contraste dans l'image produit par l'objet étalon (**21**) lors de la phase de référencement et le contraste dans l'image produit par l'objet étalon (**21**) lors de cette phase de qualification, en vue de déterminer si le réglage optique du système de vision (**3**) a changé, et dans le cas d'un changement, à alerter et/ou régler le système de vision (**3**) de manière que le contraste dans l'image produit par l'objet étalon (**21**) lors de cette phase de référencement devienne conforme au contraste dans l'image produit par l'objet étalon (**21**) lors de la phase de référencement.

4. Procédé selon la revendication 1, **caractérisé en ce qu'**il consiste lors de la phase de référencement du système de vision (**3**), à réaliser préalablement au positionnement de l'étalon de référence (**20**), une pré-étape de réglage consistant à placer devant la source de lumière (**6**) et dans le champ de vision du capteur d'images (**5**), un article de référence, et à régler le système de vision (**3**) pour obtenir un réglage optique optimisé.

5. Procédé selon l'une des revendications 1 à 4, **caractérisé en ce qu'**il consiste lors de la prise d'images, à mémoriser soit l'image de l'étalon de référence (**20**), soit au moins une mesure dudit contraste dans l'image produit par l'objet étalon (**21**) et correspondant au réglage optique du système de vision (**3**).

6. Procédé selon la revendication 2, **caractérisé en ce qu'**il consiste à mesurer le contraste dans l'image des objets étalons (**21**) soit par la surface ou la largeur de la partie sombre de l'image (**i**) de l'objet étalon (**21**), soit par le rapport entre la surface de la partie sombre de l'image (**i**) de l'objet étalon (**21**) et la surface totale de l'image (**i**) de l'objet étalon (**21**), soit la surface ou le diamètre de la partie claire de l'image (**i**) de l'objet étalon réfractant (**21**), soit par le rapport entre la surface de la partie claire de l'image (**i**) de l'objet étalon (**21**) et la surface totale de l'image (**i**) de l'objet étalon (**21**), soit l'histogramme de l'image (**i**) de l'objet étalon (**21**), soit le niveau de gris moyen de l'objet étalon.

7. Procédé selon l'une des revendications 1 à 6, **caractérisé en ce qu'**il consiste à mesurer dans l'image, en plus du contraste des objets étalons (**21**), la luminosité moyenne de l'image, et/ou la nétteté, et/ou le grandissement, et/ou la luminosité des filtres de densité graduelle.

8. Procédé selon la revendication 1, **caractérisé en ce qu'**il consiste à placer devant la source de lumière (**6**), un étalon de référence (**20**) comportant plusieurs objets étalons (**21**) réfractant la lumière suivant des gammes d'angles connues différentes.

9. Procédé selon l'une des revendications 1 à 8, **caractérisé en ce qu'**il consiste à placer devant la source de lumière (**6**), l'étalon de référence (**20**) comportant des filtres (**23**) de densité graduelle et/ou une gamme d'objets opaques (**25**) de dimensions connues.

10. Procédé selon l'une des revendications 1 à 6, **caractérisé en ce qu'**il consiste à réaliser en tant qu'objets étalons (**21**) réfractants la lumière, des lentilles, des cônes transparents, ou des dièdres transparents.

11. Procédé selon l'une des revendications 1 à 3, **caractérisé en ce qu'**il consiste à réaliser les objets étalons réfractants (**21**) la lumière dans un matériau présentant un indice de réfraction sensiblement égal à l'indice de réfraction du matériau des articles (**2**).

12. Etalon de référence pour la mise en oeuvre du procédé d'inspection optique conforme à l'une des revendications 1 à 11, **caractérisé en ce qu'**il comporte un support (**22**) pourvu d'une série d'objets étalons (**21**) réfractants la lumière suivant des gammes d'angles connues différentes.

13. Etalon de référence selon la revendication 12, **caractérisé en ce qu'**il comporte en tant qu'objets étalons (**21**), des lentilles, des cônes transparents ou des dièdres transparents.

14. Etalon de référence selon la revendication 12, **caractérisé en ce qu'**il comporte une série de filtres de densité graduelle (**23**).

15. Etalon de référence selon l'une des revendications 12 à 14, **caractérisé en ce qu'**il comporte une série de zones opaques (**25**) de différentes dimensions.

16. Poste d'inspection optique d'articles (**2**) à l'aide d'un système de vision (**3**), **caractérisé en ce qu'**il comporte un support pour un étalon de référence (**20**) conforme à l'une des revendications 12 à 15, et un système de déplacement du support pour placer temporairement l'étalon de référence (**20**) dans le champ de vision du capteur d'images, à la place d'un article (**2**).

17. Poste d'inspection optique selon la revendication 16, **caractérisé en ce qu'**il comporte un système permettant de piloter automatiquement, au moins un paramètre qui influe le réglage optique du système de vision (**3**), ce système étant commandé par l'unité (**18**) de traitement et d'analyses des images du système de vision (**3**) de manière à agir sur au moins un paramètre qui influe le réglage optique du système de vision (**3**) de manière que le contraste dans l'image produit par l'objet étalon (**21**) correspondant au réglage optique du système de vision (**3**) lors de la phase de qualification soit conforme au contraste dans l'image produit par l'objet étalon (**21**) lors de la phase de référencement.

## Patentansprüche

1. Optisches Verfahren zur Prüfung von Artikeln (2) aus transparenten oder transluzenten Materialien mit Hilfe eines Sichtsystems (3), wobei das Verfahren darin besteht:
- die Artikel (2) mit Hilfe einer Lichtquelle (6) zu beleuchten, deren Winkelspektrum dem Kontrast, welcher für brechende Objekte gewählt ist, die die Artikel (2) aufweisen, angepasst ist,
- mit Hilfe eines Bildsensors (5) das Licht, welches die Artikel (2) durchquert hat, aufzufangen, um Bilder der Artikel (2) zu bilden, und
- die Bilder zu analysieren, um das Vorliegen der lichtbrechenden Objekte zu erfassen,
**dadurch gekennzeichnet, dass** es darin besteht:
* während einer Phase zum Referenzieren des Sichtsystems (3):
- vor der Lichtquelle (6) und in dem Sichtfeld des Bildsensors (5) ein Referenzmodell (20) mit wenigstens einem Standardobjekt (21), welches das Licht in einem bekannten Winkelbereich bricht, anzuordnen,
- wenigstens ein Bild des Referenzmodells (20) aufzunehmen, um wenigstens den Kontrast in dem Bild zu messen, der durch wenigstens ein Standardobjekt (21) erzeugt wird und einer optimierten optischen Einstellung des Sichtsystems (3) entspricht,
* und während wenigstens einer Phase zur Qualifizierung des Sichtsystems (3):
- das Referenzmodell (20) erneut vor der Lichtquelle (6) und in dem Sichtfeld des Bildsensors (5) anzuordnen,
- wenigstens ein Bild (I) des Referenzmodells (20) aufzunehmen, um wenigstens den Kontrast in dem Bild zu messen, der durch das Standardobjekt (21) erzeugt wird und der optischen Einstellung des Sichtsystems (3) während dieser Qualifizierungsphase entspricht, und
wenigstens zu bestimmen, ob der durch das Standardobjekt (21) erzeugte Kontrast in dem Bild, der der optischen Einstellung des Sichtsystems (3) während dieser Qualifizierungsphase entspricht, mit dem durch das Standardobjekt (21) während der Referenzierungsphase erzeugten Kontrast in dem Bild übereinstimmt oder nicht.

2. Verfahren nach Anspruch 1, **dadurch gekennzeichnet, dass** es während der Qualifizierungsphase, die darauf abzielt, ein Sichtsystem (3) einzustellen, darin besteht, die optische Einstellung des Sichtsystems (3) sicherzustellen, so dass der durch das Standardobjekt (21) erzeugte Kontrast in dem Bild, der der Einstellung entspricht, mit dem durch das Standardobjekt (21) während der Referenzierungsphase erzeugten Kontrast in dem Bild übereinstimmt.

3. Verfahren nach Anspruch 1, **dadurch gekennzeichnet, dass** es während der Qualifizierungsphase, die darauf abzielt, die optische Einstellung des Sichtsystems (3) zu überprüfen, darin besteht, den durch das Standardobjekt (21) während der Referenzierungsphase erzeugten Kontrast in dem Bild und den durch das Standardobjekt (21) während dieser Qualifizierungsphase erzeugten Kontrast in dem Bild zu vergleichen, um zu bestimmen, ob sich die optische Einstellung des Sichtsystems (3) geändert hat, und im Falle einer Änderung zu alarmieren und/oder das Sichtsystem (3) einzustellen, so dass der durch das Standardobjekt (21) während dieser Referenzierungsphase erzeugte Kontrast in dem Bild mit dem durch das Standardobjekt (21) während der Referenzierungsphase erzeugten Kontrast in dem Bild in Übereinstimmung gebracht wird.

4. Verfahren nach Anspruch 1, **dadurch gekennzeichnet, dass** es während der Referenzierungsphase des Sichtsystems (3) darin besteht, vor der Positionierung des Referenzmodells (20) einen vorhergehenden Einstellschritt durchzuführen, der darin besteht, vor der Lichtquelle (6) und in dem Sichtfeld des Bildsensors (5) einen Referenzartikel anzuordnen und das Sichtsystem (3) einzustellen, um eine optimierte optische Einstellung zu erhalten.

5. Verfahren nach einem der Ansprüche 1 bis 4, **dadurch gekennzeichnet, dass** es während der Aufnahme von Bildern darin besteht, entweder das Bild des Referenzmodells (20) oder wenigstens eine Messung des Kontrasts in dem Bild, der durch das Standardobjekt (21) erzeugt wird und der optischen Einstellung des Sichtsystems (3) entspricht, zu speichern.

6. Verfahren nach Anspruch 2, **dadurch gekennzeichnet, dass** es darin besteht, den Kontrast in dem Bild der Standardobjekte (21) entweder durch die Fläche oder die Breite des dunklen Teils des Bildes (i) des Standardobjekts (21) oder durch das Verhältnis zwischen der Fläche des dunklen Teils des Bildes (i) des Standardobjekts (21) und der Gesamtfläche des Bildes (i) des Standardobjekts (21) oder die Fläche oder den Durchmesser des hellen Teils des Bildes (i) des brechenden Standardobjekts (21) oder durch das Verhältnis zwischen der Fläche des hellen Teils des Bildes (i) des Standardobjekts (21) und der Gesamtfläche des Bildes (i) des Standardobjekts (21) oder das Histogramm des Bildes (i) des Standardobjekts (21) oder den durchschnittlichen Graupegel des Standardobjekts zu messen.

7. Verfahren nach einem der Ansprüche 1 bis 6, **dadurch gekennzeichnet, dass** es darin besteht, in dem Bild zusätzlich zu dem Kontrast der Standardobjekte (21) die durchschnittliche Helligkeit des Bildes und/oder die Schärfe und/oder die Vergrößerung und/oder die Helligkeit der Filter mit gradueller Dichte zu messen.

8. Verfahren nach Anspruch 1, **dadurch gekennzeichnet, dass** es darin besteht, vor der Lichtquelle (6) ein Referenzmodell (20) mit mehreren Standardobjekten (21), die das Licht in unterschiedlichen bekannten Winkelbereichen brechen, anzuordnen.

9. Verfahren nach einem der Ansprüche 1 bis 8, **dadurch gekennzeichnet, dass** es darin besteht, vor der Lichtquelle (6) das Referenzmodell (20) mit Filtern (23) mit gradueller Dichte und/oder eine Serie von opaken Objekten (25) mit bekannten Abmessungen anzuordnen.

10. Verfahren nach einem der Ansprüche 1 bis 6, **dadurch gekennzeichnet, dass** es darin besteht, als lichtbrechende Standardobjekte (21) Linsen, transparente Kegel oder transparente Dieder auszubilden.

11. Verfahren nach einem der Ansprüche 1 bis 3, **dadurch gekennzeichnet, dass** es darin besteht, die lichtbrechenden Standardobjekte (21) aus einem Material auszubilden, das einen Brechungsindex aufweist, der im Wesentlichen gleich dem Brechungsindex des Materials der Artikel (2) ist.

12. Referenzmodell für die Durchführung des optischen Prüfverfahrens nach einem der Ansprüche 1 bis 11, **dadurch gekennzeichnet, dass** es einen Träger (22) umfasst, der mit einer Reihe von Standardobjekten (21), die das Licht in unterschiedlichen bekannten Winkelbereichen brechen, versehen ist.

13. Referenzmodell nach Anspruch 12, **dadurch gekennzeichnet, dass** es als Standardobjekte (21) Linsen, transparente Kegel oder transparente Dieder umfasst.

14. Referenzmodell nach Anspruch 12, **dadurch gekennzeichnet, dass** es eine Reihe von Filtern mit gradueller Dichte (23) umfasst.

15. Referenzmodell nach einem der Ansprüche 12 bis 14, **dadurch gekennzeichnet, dass** es eine Reihe von opaken Bereichen (25) mit unterschiedlichen Abmessungen umfasst.

16. Station zur optischen Prüfung von Artikeln (2) mit Hilfe eines Sichtsystems (3), **dadurch gekennzeichnet, dass** sie einen Träger für ein Referenzmodell (20) gemäß einem der Ansprüche 12 bis 15 sowie ein System zum Bewegen des Trägers umfasst, um das Referenzmodell (20) in dem Sichtfeld des Bildsensors anstelle eines Artikels (2) temporär anzuordnen.

17. Station zur optischen Prüfung nach Anspruch 16, **dadurch gekennzeichnet, dass** sie ein System umfasst, das ermöglicht, wenigstens einen Parameter, der die optische Einstellung des Sichtsystems (3) beeinflusst, automatisch zu steuern, wobei dieses System durch die Einheit (18) zur Verarbeitung und für Analysen der Bilder des Sichtsystems (3) gesteuert wird, um auf wenigstens einen Parameter einzuwirken, der die optische Einstellung des Sichtsystems (3) beeinflusst, so dass der durch das Standardobjekt (21) erzeugte Kontrast in dem Bild, der der optischen Einstellung des Sichtsystems (3) während der Qualifizierungsphase entspricht, mit dem durch das Standardobjekt (21) während der Referenzierungsphase erzeugten Kontrast in dem Bild übereinstimmt.

## Claims

1. An optical method of inspecting articles (2) of transparent or translucent material with the help of a vision system (3), the method consisting:
· in illuminating the articles (2) with the help of a light source (6) having an angular spectrum that is adapted to the contrast selected for refractive items presented by the articles (2);
· in using an image sensor (5) for picking up the light that has passed through the articles (2) in order to make images of the articles (2); and
· in analysing the images in order to detect the presence of light-refracting items;
the method being **characterized in that** it consists:
· during a stage of referencing the vision system (3):
· in placing a reference standard (20) in front of the light source (6) and in the field of view of the image sensor (5), the reference standard (20) including at least one standard item (21) that refracts light in a known range of angles; and
· in taking at least one image of the reference standard (20) so as to measure at least the contrast in the image produced by at least one standard item (21) and corresponding to an optimize optical adjustment of the vision system (3); and
· during at least one stage of qualifying the vision system (3):
· in placing the reference standard (20) once more in front of the light source (6) and in the field of view of the image sensor (5);
· in taking at least one image (I) of the reference standard (20) so as to measure at least the contrast in the image produced by the standard item (21) and corresponding to the optical adjustment of the vision system (3) during this qualification stage; and
· in determining at least whether the contrast in the image produced by the standard item (21) corresponding to the optical adjustment of the vision system (3) during this qualification stage does or does not comply with the contrast in the image produced by the standard item (21) during the referencing stage.

2. A method according to claim 1, **characterized in that**, during the qualification stage for adjusting a vision system (3), it consists in optically adjusting the vision system (3) so that the contrast in the image produced by the standard item (21) corresponding to said adjustment is in compliance with the contrast in the image produced by the standard item (21) during the referencing stage.

3. A method according to claim 1, **characterized in that**, during the qualification stage seeking to verify the optical adjustment of the vision system (3), it consists in comparing the contrast in the image produced by the standard item (21) during the referencing stage with the contrast of the image produced by the standard item (21) during this qualification stage, in order to determine whether the optical adjustment of the vision system (3) has changed, and if it has changed, in issuing a warning and/or in adjusting the vision system (3) in such a manner that the contrast in the image produced by the standard item (21) during this referencing stage complies with the contrast in the image produced by the standard item (21) during the referencing stage.

4. A method according to claim 1, **characterized in that**, during the stage of referencing the vision system (3), it consists in performing an adjustment pre-step prior to positioning the reference standard (20), which adjustment pre-step consists in placing a reference article in front of the light source (6) and in the field of view of the image sensor (5), and in adjusting the vision system (3) to obtain an optimized optical adjustment.

5. A method according to any one of claims 1 to 4, **characterized in that**, while taking images, it consists in storing either the image of the reference standard (20), or at least measuring said contrast in the image produced by the standard item (21) and corresponding to the optical adjustment of the vision system (3).

6. A method according to claim 2, **characterized in that** it consists in measuring the contrast in the image of the standard items (21) either by the area or by the width of the dark portion of the image (i) of the standard item (21), or by the ratio between the area of the dark portion of the image (i) of the standard item (21) to the total area of the image (i) of the standard item (21), or by the area or the diameter of the pale portion of the image (i) of the refracting standard item (21), or by the ratio of the area of the pale portion of the image (i) of the standard item (21) to the total area of the image (i) of the standard item (21), or by the histogram of the image (i) of the standard item (21), or by the mean gray level of the standard item.

7. A method according to any one of claims 1 to 6, **characterized in that** it consists, in addition to measuring the contrast of the standard items (21), in measuring in the image the mean brightness of the image, and/or the sharpness, and/or the magnification, and/or the brightness of graded density filters.

8. A method according to claim 1, **characterized in that** it consists in placing a reference standard (20) in front of the light source (6), the reference standard having a plurality of standard items (21) that refract light in different known angle ranges.

9. A method according to any one of claims 1 to 8, **characterized in that** it consists in placing the reference standard (20) in front of the light source (6), the reference standard including graded density filters (23) and/or a range of opaque items (25) of known dimensions.

10. A method according to any one of claims 1 to 6, **characterized in that** it consists in providing as light-refracting standard items (21), lenses, transparent cones, or transparent dihedral ridges.

11. A method according to any one of claims 1 to 3, **characterized in that** it consists in making the light-refracting standard items (21) out of a maternal that presents a refractive index that is substantially equal to the refractive index of the material of the articles (2).

12. A reference standard for performing the optical inspection method in accordance with any one of claims 1 to 11, the standard being **characterized in that** it comprises a medium (22) provided with a series of standard items (21) that refract light in different known angle ranges.

13. A reference standard according to claim 12, **characterized in that**, as standard items (21) it includes lenses, transparent cones, or transparent dihedral ridges.

14. A reference standard according to claim 12, **characterized in that** it includes a series of graded density filters (23).

15. A reference standard according to any one of claims 12 to 14, **characterized in that** it includes a series of opaque zones (25) of different dimensions.

16. An optical inspection station for inspecting articles (2) with the help of a vision system (3), the station being **characterized in that** it includes a support for a reference standard (20) according to any one of claims 12 to 15, and a system for moving the support in order to place the reference standard (20) temporarily in the field of view of the image sensor so that it takes the place of an article (2).

17. An optical inspection station according to claim 16, **characterized in that** it includes a system enabling at least one parameter that influences the optical adjustment of the vision system (3) to be controlled automatically, the system itself being controlled by the unit (18) for processing and analyzing images from the vision system (3) so as to act on at least one parameter that influences the optical adjustment of the vision system (3) in such a manner that the contrast in the image produced by the standard item (21) corresponding to the optical adjustment of the vision system (3) during the qualification stage complies with the contrast in the image produced by the standard item (21) during the referencing stage.
